# FASCICULE DE BREVET EUROPEEN

(11) **EP 1 513 919 B1**
(45) Date de publication et mention de la délivrance du brevet: **01.02.2006**
(21) Numéro de dépôt: 03760749.6
(22) Date de dépôt: 19.06.2003
(51) Int. Cl.: C12G 3/12, B01D 3/02

(54) **ALAMBIC DE CONTENANCE ACCRUE, ASSURANT UNE DISTILLATION DE HAUTE QUALITE**
DESTILLIERAPPARAT MIT ERHÖHTER KAPAZITÄT ZUR HOCHQUALITATIVEN DESTILLATION
INCREASED-CAPACITY STILL FOR HIGH-QUALITY DISTILLATION

(30) Priorité: 20.06.2002 FR 0207657
(43) Date de publication de la demande: 16.03.2005
(73) Titulaire: Société Jas Hennessy & Co, 16100 Cognac (FR)
(72) Inventeur: PINEAU, Jean, F-16100 Cognac (FR)
(74) Mandataire: Thinat, Michel
(86) Numéro de dépôt international: PCT/FR2003/001882
(87) Numéro de publication internationale: WO 2004/000991

(56) Documents cités:
- EP-A- 0 459 310
- DE-A- 3 150 283
- GB-A- 419 436
- DATABASE WPI Section Ch, Week 198444 Derwent Publications Ltd., London, GB; Class D16, AN 1984-272204 XP002230401 & JP 59 166077 A (BISHONEN SHUZO KK), 19 septembre 1984 (1984-09-19)

## Description

La présente invention se situe de façon générale dans le domaine de la distillation, notamment de la distillation de vin, et en particulier pour l'élaboration de cognac.

Plus précisément, l'invention concerne un alambic de distillation d'un liquide alcoolisé consommable, cet alambic comprenant une enceinte à paroi de cuivre destinée à recevoir un liquide alcoolisé, la capacité de charge de cette enceinte représentant un certain volume, et le liquide occupant ce volume en début de distillation et la paroi définissant, par contact mutuel, une première interface présentant une aire dont le rapport au volume est au plus égal à 27 centimètres carrés par litre.

Dans le champ d'application privilégié de l'invention, c'est-à-dire pour l'élaboration du cognac, la distillation est réalisée en deux étapes.

La première distillation, appelée "première chauffe" ou "chauffe du vin", permet, à partir du vin, d'obtenir un premier distillat appelé "brouillis".

Cette première chauffe est à ce jour très avantageusement réalisée dans des alambics de contenance relativement faible, traditionnellement de 25 hectolitres.

En effet, l'homme de métier sait par expérience que les eaux-de-vie issues d'une première distillation dans des alambics de contenance plus élevée, par exemple de 50 hectolitres et a fortiori de 100 hectolitres, manquent de "finesse".

Autrement dit, ces eaux-de-vie, pour le dégustateur averti, se caractérisent par une certaine "lourdeur" et se distinguent nettement, par leurs propriétés organoleptiques, des eaux-de-vie obtenues par distillation dans des alambics de 25 hectolitres qui présentent une plus grande légèreté. On désigne par le qualificatif de "lourdeur" des impressions gustatives et/ou olfactives rappelant celles des corps gras.

Dans ces conditions, l'homme de métier prend naturellement la distillation dans un alambic de 25 hectolitres comme la référence en termes de qualité d'une eau-de-vie.

GB 419436 décrit un alambic de distillation, comprenant des éléments additionnels en cuivre.

Le problème est que les besoins quantitatifs, en matière de production d'eau-de-vie et notamment de cognac, justifieraient, pour la première distillation, l'emploi d'alambics de grande contenance, par exemple de 50 hectolitres à 100 hectolitres, dont le coût de fabrication et d'installation, à volume de production identique, est très inférieur à celui des alambics de 25 hectolitres.

Dans ce contexte, la présente invention a pour but de proposer un alambic de contenance supérieure à 25 hectolitres, propre à produire une eau-de-vie de haute qualité, sensiblement identique, par ses propriétés organoleptiques, à une eau-de-vie obtenue par distillation dans un alambic de 25 hectolitres.

A cette fin, l'alambic de l'invention, par ailleurs conforme à la définition générique qu'en donne le préambule ci-dessus, est essentiellement caractérisé en ce qu'il comprend en outre au moins un élément de surface de contact additionnel en cuivre, disposé dans l'enceinte, au moins partiellement immergé dans le liquide alcoolisé, et définissant avec lui lorsqu'il occupe le volume défini par la capacité de charge de l'enceinte une seconde interface d'aire non nulle, et en ce que le rapport de l'aire totale des première et seconde interfaces au volume occupé par le liquide alcoolisé en début de distillation est au moins égal à 30 centimètres carrés par litre.

En pratique, le rapport de l'aire totale des première et seconde interfaces au volume est avantageusement au plus égal à 45 centimètres carrés par litre, ou de préférence au plus égal à 40 centimètres carrés par litre.

Dans son mode de réalisation préféré, l'alambic de l'invention comprend une pluralité d'éléments de surface de contact additionnels en cuivre formés par des plaques de cuivre respectives disposées verticalement dans l'enceinte.

Ces plaques de cuivre sont par exemple disposées radialement autour d'un axe de symétrie vertical de l'enceinte, et sont fixées les unes aux autres par des organes de maintien qui forment avec les plaques une structure rigide.

Les organes de maintien comprennent avantageusement un piétement de cuivre par lequel la structure rigide repose sur le fond de l'enceinte.

Ces organes de maintien peuvent aussi comprendre deux anneaux de cuivre espacés l'un de l'autre, parallèles l'un à l'autre, centrés sur l'axe de symétrie de l'enceinte, et fixés à chacune des plaques.

L'alambic de l'invention est particulièrement applicable à la distillation de vin ou d'un distillat de vin, en tant que liquide alcoolisé consommable, et plus particulièrement encore au cas où le vin est distillé pour l'élaboration de cognac.

L'invention est également applicable à toutes les productions d'alcool à base de grains (céréales), en particulier le whisky et le bourbon.

Dans toutes les applications de cet alambic, il est judicieux de faire en sorte que chaque élément de surface de contact additionnel en cuivre reste totalement immergé dans le liquide alcoolisé pendant toute la distillation.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en coupe verticale d'un alambic connu;
- la Figure 2 est une vue en coupe verticale partielle d'un alambic conforme à l'invention; et
- la Figure 3 est une vue en coupe horizontale de l'alambic illustré à la figure 2 et observé suivant l'incidence définie par les flèches III-III de cette figure 2.

Comme annoncé précédemment, l'invention concerne un alambic destiné à permettre la distillation d'un liquide alcoolisé consommable L, par exemple du vin, et en particulier utilisable pour l'élaboration de cognac.

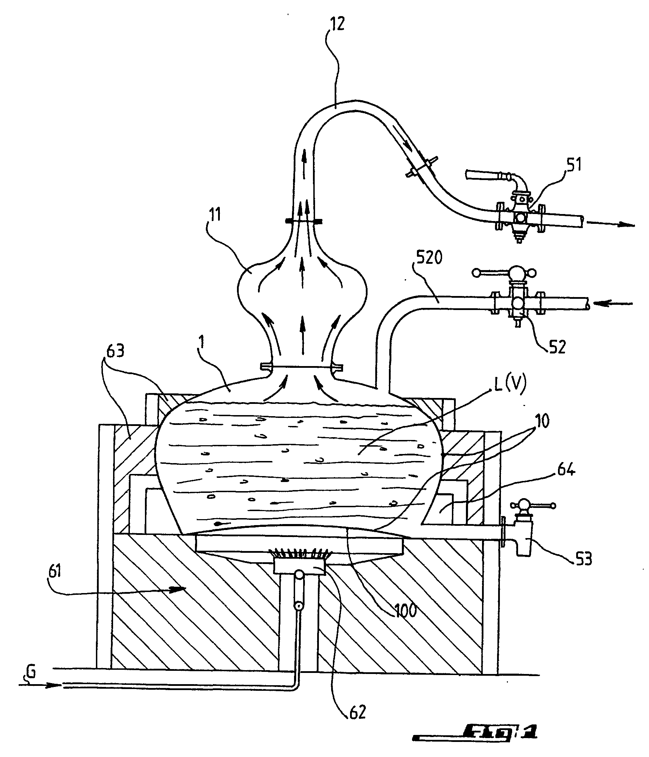

Un tel alambic comprend traditionnellement (figure 1) une enceinte 1, qui en forme la partie basse encore appelée "cucurbite", un chapiteau 11 coiffant l'enceinte 1 de façon étanche, et un col de cygne 12 prolongeant le chapiteau 11 et conduisant à un serpentin de condensation (non représenté).

La paroi 10 de l'enceinte 1, y inclus le fond 100 de celle-ci, ainsi que le chapiteau 11, le col de cygne 12, et le serpentin sont réalisés en cuivre.

Une vanne de détour 51 est généralement interposée entre le col de cygne et le serpentin (non représenté).

En partie haute de l'enceinte 1 débouche un conduit de charge 520 sur lequel est interposée une vanne de charge 52 propre à établir une communication entre un chauffe-vin (non représenté) et l'enceinte 1, pour le remplissage de cette dernière par du vin préalablement chauffé au début de chaque cycle de distillation.

En partie basse, l'enceinte 1 est reliée à une vanne de vidange ou "gargousse" 53 pour l'évacuation des vinasses, le fond 100 de l'enceinte 1 étant concave pour favoriser le vidage intégral de celle-ci.

L'enceinte 1 est posée sur un socle 61, au-dessus d'un brûleur 62, par exemple un brûleur alimenté en un gaz combustible G.

Un manteau réfractaire 63, construit sur le socle 61, délimite un tour à feu 64 entourant l'enceinte 1 et relié à une cheminée (non représentée).

L'enceinte 1 possède une capacité de charge représentant un certain volume V qui au moins au début d'un cycle de distillation est occupé par du vin ou par un autre liquide alcoolisé L.

A ce stade de remplissage de l'enceinte 1, le vin ou liquide alcoolisé L contenu dans l'enceinte et la paroi 10 de celle-ci définissent, par contact mutuel, une interface présentant une aire qui sera ci-après symboliquement notée S1.

En début de cycle de distillation, pour les alambics de contenance relativement élevée et par exemple d'au moins 50 hectolitres auxquels s'applique l'invention, le rapport S1/V de l'aire S1 au volume V de vin ou autre liquide alcoolisé L contenu dans l'enceinte est au plus égal à 27 centimètres carrés par litre.

Pour permettre à un tel alambic de produire une eau-de-vie de qualité optimale, l'invention propose notamment d'augmenter la surface de contact entre le vin, ou autre liquide à distiller, et le cuivre.

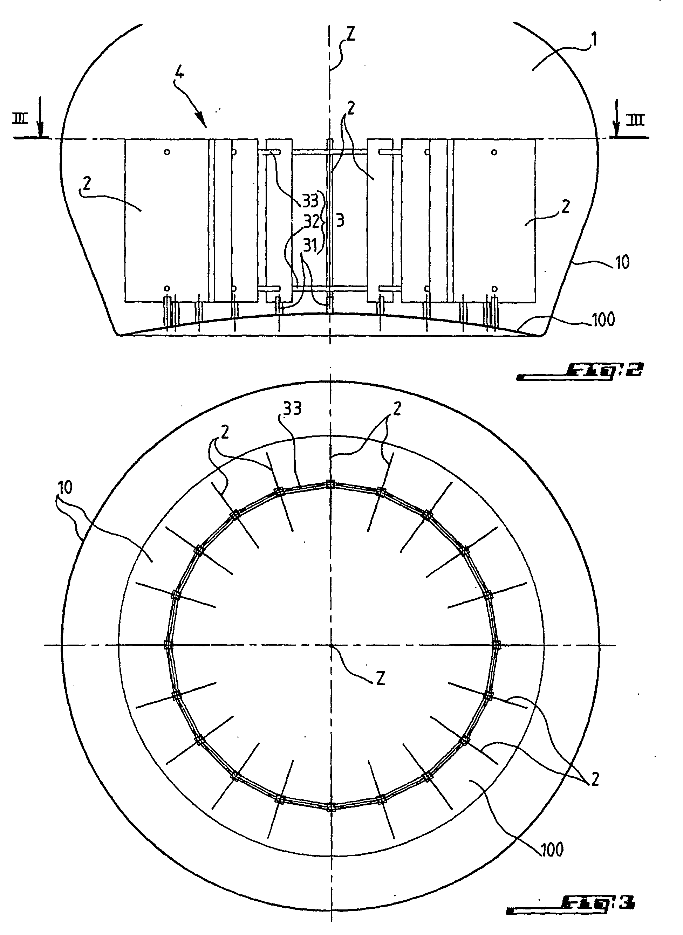

Ainsi, un alambic de contenance relativement élevée et conforme à l'invention comprend (figures 2 et 3) un ou plusieurs éléments de surface de contact additionnels en cuivre, prenant par exemple la forme de plaques 2, disposés dans l'enceinte 1, au moins partiellement immergés dans le vin ou autre liquide alcoolisé L, et définissant avec lui une interface supplémentaire présentant une aire non nulle qui sera ci-après symboliquement notée S2.

L'effet d'un tel agencement est optimal lorsque le rapport (S1+S2)/V de l'aire totale (S1+S2) des interfaces formées par contact mutuel de la paroi 10 et du vin ou autre liquide alcoolisé L contenu dans l'enceinte 1, au volume V de ce vin ou autre liquide alcoolisé L, est au moins égal à 30 centimètres carrés par litre, mais de préférence au plus égal à 45 centimètres carrés par litre.

Comme le montrent les figures 2 et 3, les éléments de surface de contact additionnels en cuivre sont par exemple formés par des plaques de cuivre respectives rectangulaires 2, disposées verticalement dans l'enceinte 1.

Ces plaques 2 peuvent être disposées radialement autour de l'axe de symétrie vertical Z de l'enceinte 1, et être fixées les unes aux autres par des organes de maintien 3, qui forment avec ces plaques 2 une structure rigide 4.

En particulier, ces organes de maintien 3 comprennent avantageusement un piétement de cuivre 31, par lequel la structure rigide 4 repose sur le fond 100 de l'enceinte 1, et qui favorise le flux thermique depuis le fond 100 de l'enceinte 1 jusqu'aux plaques 2.

Ces organes de maintien 3 peuvent aussi comprendre deux anneaux de cuivre, 32 et 33, espacés l'un de l'autre, parallèles l'un à l'autre, centrés sur l'axe de symétrie Z de l'enceinte 1, et fixés à chacune des plaques 2 par tout moyen adéquat.

A titre d'exemple, ces anneaux peuvent être enfilés dans des perçages des plaques 2 et fixés à celles-ci par modelage à froid du cuivre des anneaux et/ou des plaques.

Dans la mise en oeuvre de l'invention, il est conseillé de faire en sorte que chaque plaque en cuivre 2 soit totalement immergée dans le vin ou autre liquide alcoolisé L au moins en début de cycle de distillation, et de préférence qu'elle le reste pendant toute la distillation.

## Revendications

1. Alambic de distillation d'un liquide alcoolisé consommable, cet alambic comprenant une enceinte (1) à paroi de cuivre (10) destinée à recevoir un liquide alcoolisé (L), la capacité de charge de ladite enceinte (1) représentant un certain volume (V) et le liquide (L) occupant ledit volume (V) en début de distillation et la paroi (10) définissant, par contact mutuel, une première interface présentant une aire (S1) dont le rapport (S1/V) au volume (V) est au plus égal à 27 centimètres carrés par litre, **caractérisé en ce qu'**il comprend en outre au moins un élément de surface de contact additionnel en cuivre (2), disposé dans l'enceinte (1), au moins partiellement immergé dans le liquide alcoolisé (L), et définissant avec lui lorsqu'il occupe le volume (V) une seconde interface d'aire (S2) non nulle, et **en ce que** le rapport ((S1+S2)/V) de l'aire totale (S1+S2) des première et seconde interfaces au volume (V) est au moins égal à 30 centimètres carrés par litre.

2. Alambic suivant la revendication 1, **caractérisé en ce que** le rapport ((S1+S2)/V) de l'aire totale (S1+S2) des première et seconde interfaces au volume (V) est au plus égal à 45 centimètres carrés par litre, ou de préférence au plus égal à 40 centimètres carrés par litre.

3. Alambic suivant la revendication 1 ou 2, **caractérisé en ce qu'**il comprend une pluralité d'éléments de surface de contact additionnels en cuivre (2) formés par des plaques de cuivre respectives (2) disposées verticalement dans l'enceinte (1).

4. Alambic suivant la revendication 3, **caractérisé en ce que** les plaques de cuivre (2) sont disposées radialement autour d'un axe de symétrie vertical (Z) de l'enceinte (1), et sont fixées les unes aux autres par des organes de maintien (3) qui forment avec les plaques (2) une structure rigide (4).

5. Alambic suivant la revendication 4, **caractérisé en ce que** les organes de maintien (3) comprennent un piétement de cuivre (31) par lequel la structure rigide (4) repose sur le fond (100) de l'enceinte (1).

6. Alambic suivant la revendication 4 ou 5, **caractérisé en ce que** les organes de maintien (3) comprennent deux anneaux de cuivre (32, 33) espacés l'un de l'autre, parallèles l'un à l'autre, centrés sur l'axe de symétrie (Z) de l'enceinte (1), et fixés à chacune des plaques (2).

7. Application d'un alambic suivant l'une quelconque des revendications précédentes à la distillation de vin ou d'un distillat de vin, en tant que liquide alcoolisé consommable (L).

8. Application suivant la revendication 7, dans laquelle chaque élément de surface de contact additionnel en cuivre (2) reste totalement immergé dans le vin pendant toute la distillation.

9. Application suivant la revendication 7 ou 8, dans laquelle le vin est distillé pour l'élaboration de cognac.

## Patentansprüche

1. Destillierapparat zum Destillieren einer trinkbaren alkoholischen Flüssigkeit, wobei dieser Destillierapparat ein Gefäß (1) mit Kupferwandung (10) enthält, das dazu bestimmt ist, eine alkoholische Flüssigkeit (L) aufzunehmen, wobei das Fassungsvermögen des genannten Gefäßes (1) ein bestimmtes Volumen (V) darstellt und die Flüssigkeit (L) das genannte Volumen (V) zu Beginn der Destillation einnimmt und die Wandung (10) durch gegenseitigen Kontakt eine erste Schnittstelle mit einer Fläche (S1) definiert, deren Verhältnis (S1/V) zum Volumen (V) höchstens 27 cm²/l beträgt, **dadurch gekennzeichnet, dass** er ferner zumindest ein zusätzliches Kontaktflächenelement (2) aus Kupfer enthält, das in dem Gefäß (1) angeordnet ist, zumindest teilweise in die alkoholische Flüssigkeit (L) eintaucht und mit dieser bei Einnehmen des Volumens (V) eine zweite Schnittfläche (S2) ungleich null definiert, und dass das Verhältnis ((S1+S2)/V) der Gesamtfläche (S1+S2) der ersten und der zweiten Schnittfläche zum Volumen (V) zumindest 30 cm²/l beträgt.

2. Destillierapparat nach Anspruch 1, **dadurch gekennzeichnet, dass** das Verhältnis ((S1+S2)/V) der Gesamtfläche (S1+S2) der ersten und der zweiten Schnittfläche zum Volumen (V) zumindest 45 cm²/l bzw. vorzugsweise höchstens 40 cm²/l beträgt.

3. Destillierapparat nach Anspruch 1 oder 2, **dadurch gekennzeichnet, dass** er eine Mehrzahl von zusätzlichen Kontaktflächenelementen (2) aus Kupfer enthält, die von jeweiligen Kupferplatten (2) gebildet werden, die senkrecht in dem Gefäß (1) angeordnet sind.

4. Destillierapparat nach Anspruch 3, **dadurch gekennzeichnet, dass** die Kupferplatten (2) radial um eine senkrechte Symmetrieachse (Z) des Gefäßes (1) angeordnet und über Halteorgane (3) aneinander befestigt sind, die mit den Platten (2) einen starren Aufbau (4) bilden.

5. Destillierapparat nach Anspruch 4, **dadurch gekennzeichnet, dass** die Halteorgane (3) ein Kupfergestell (31) enthalten, mit dem der starre Aufbau (4) am Boden (100) des Gefäßes (1) aufliegt.

6. Destillierapparat nach Anspruch 4 oder 5, **dadurch gekennzeichnet, dass** die Halteorgane (3) zwei Kupferringe (32, 33) enthalten, die voneinander beabstandet sind, parallel zueinander verlaufen, auf die Symmetrieachse (Z) des Gefäßes (1) zentriert und an jede der Platten (2) befestigt sind.

7. Verwendung eines Destillierapparats nach einem der vorangehenden Ansprüche zum Destillieren von Wein oder eines Weindestillats als trinkbare alkoholische Flüssigkeit (L).

8. Verwendung nach Anspruch 7, bei der jedes zusätzliche Kontaktflächenelement (2) aus Kupfer während der gesamten Destillation vollständig in Wein eingetaucht bleibt.

9. Verwendung nach Anspruch 7 oder 8, bei der der Wein zur Herstellung von Cognac destilliert wird.

## Claims

1. An alembic for distilling a consumable alcoholic liquid, the alembic comprising an enclosure (1) with a copper wall (10) intended to receive an alcoholic liquid (L), the loading capacity of said enclosure (1) representing a certain volume (V), the liquid (L) occupying said volume (V) at the beginning of distillation and the wall (10) defining, by mutual contact, a first interface having an area (S1) whereof the ratio (S1/V) to the volume (V) is at most equal to 27 square centimetres per litre, **characterised in that** it further comprises at least one additional contact surface member (2) made of copper, disposed in the enclosure (1), at least partially immersed in the alcoholic liquid (L), and defining with it when it occupies the volume (V) a second interface of non-zero area (S2), and **in that** the ratio ((S1 + S2)/V) of the total area (S1 + S2) of the first and second interfaces to the volume (V) is at least equal to 30 square centimetres per litre.

2. An alembic according to claim 1, **characterised in that** the ratio ((S1 + S2)/V) of the total area (S1 + S2) of the first and second interfaces to the volume (V) is at most equal to 45 square centimetres per litre or preferably at most equal to 40 square centimetres per litre.

3. An alembic according to claim 1 or claim 2, **characterised in that** it comprises a plurality of additional contact surface members (2) made of copper formed by respective copper plates (2) disposed vertically in the enclosure (1).

4. An alembic according to claim 3, **characterised in that** the copper plates (2) are disposed radially about an axis (Z) of vertical symmetry of the enclosure (1) and are fixed to each other by holding members (3) that in conjunction with the plates (2) form a rigid structure (4).

5. An alembic according to claim 4, **characterised in that** the holding members (3) comprise a copper base (31) whereby the rigid structure (4) rests on the bottom (100) of the enclosure (1).

6. An alembic according to claim 4 or claim 5, **characterised in that** the holding members (3) comprise two copper rings (32, 33) spaced from and parallel to each other, concentric with the axis (Z) of symmetry of the enclosure (1), and fixed to each of the plates (2).

7. Application of an alembic according to any one of the preceding claims to distilling wine or a wine distillate constituting the consumable alcoholic liquid (L).

8. Application according to claim 7, wherein each additional contact surface member (2) made of copper remains totally immersed in the wine throughout distillation.

9. Application according to claim 7 or claim 8, wherein the wine is distilled to produce cognac.
